(19) **Europäisches Patentamt / European Patent Office / Office européen des brevets**

(11) **EP 3 227 703 B1**

(12) **EUROPEAN PATENT SPECIFICATION**

(45) Date of publication and mention of the grant of the patent:
**24.07.2019 Bulletin 2019/30**

(21) Application number: **14821885.2**

(22) Date of filing: **02.12.2014**

(51) Int Cl.:
*G01S 3/80* (2006.01)    *G01S 15/42* (2006.01)
*G01S 15/58* (2006.01)

(86) International application number:
**PCT/SG2014/000572**

(87) International publication number:
**WO 2016/089300 (09.06.2016 Gazette 2016/23)**

(54) **METHODS AND SYSTEMS FOR SPECTRAL ANALYSIS OF SONAR DATA**

VERFAHREN UND SYSTEME ZUR SPEKTRALANALYSE VON SONARDATEN

PROCÉDÉS ET SYSTÈMES D'ANALYSE SPECTRALE DE DONNÉES SONAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.10.2017 Bulletin 2017/41**

(73) Proprietors:
• **Thales Solutions Asia Pte Ltd.**
  **Singapore 498788 (SG)**
• **Nanyang Technological University**
  **Singapore 639798 (SG)**

(72) Inventors:
• **LIM, Hock-Siong**
  **Singapore 498755 (SG)**
• **NG, Boon Poh**
  **Singapore 639798 (SG)**
• **REDDY, Vinod Veera**
  **Singapore 639798 (SG)**

(74) Representative: **Watkin, Timothy Lawrence Harvey**
  **Marks & Clerk LLP**
  **Fletcher House**
  **The Oxford Science Park**
  **Heatley Road**
  **Oxford OX4 4GE (GB)**

(56) References cited:
• **VINOD V REDDY ET AL: "Insights Into MUSIC-Like Algorithm", IEEE TRANSACTIONS ON SIGNAL PROCESSING, IEEE SERVICE CENTER, NEW YORK, NY, US, vol. 61, no. 10, 1 May 2013 (2013-05-01), pages 2551-2556, XP011505527, ISSN: 1053-587X, DOI: 10.1109/TSP.2013.2251337**
• **YING ZHANG ET AL: "MUSIC-Like DOA Estimation Without Estimating the Number of Sources", IEEE TRANSACTIONS ON SIGNAL PROCESSING, IEEE SERVICE CENTER, NEW YORK, NY, US, vol. 58, no. 3, 1 March 2010 (2010-03-01), pages 1668-1676, XP011297600, ISSN: 1053-587X**
• **RAMDAS KUMARESAN ET AL: "Estimating the Angles of Arrival of Multiple Plane Waves", IEEE TRANSACTIONS ON AEROSPACE AND ELECTRONIC SYSTEMS, IEEE SERVICE CENTER, PISCATAWAY, NJ, US, vol. AES-10, no. 1, 1 January 1983 (1983-01-01), pages 134-139, XP011167006, ISSN: 0018-9251**
• **SCHMIDT R O: "MULTIPLE EMITTER LOCATION AND SIGNAL PARAMETER ESTIMATION", IEEE TRANSACTIONS ON ANTENNAS AND PROPAGATION, IEEE SERVICE CENTER, PISCATAWAY, NJ, US, vol. AP-34, no. 3, 1 March 1986 (1986-03-01), pages 276-280, XP000644956, ISSN: 0018-926X, DOI: 10.1109/TAP.1986.1143830**

- G. BIENVENU ET AL: "Adaptivity to background noise spatial coherence for high resolution passive methods", ICASSP '80. IEEE INTERNATIONAL CONFERENCE ON ACOUSTICS, SPEECH, AND SIGNAL PROCESSING, vol. 5, 1 January 1980 (1980-01-01), pages 307-310, XP055201241, DOI: 10.1109/ICASSP.1980.1171029
- G. BIENVENU ET AL: "Decreasing high resolution method sensitivity by conventional beamformer preprocessing", ICASSP '84. IEEE INTERNATIONAL CONFERENCE ON ACOUSTICS, SPEECH, AND SIGNAL PROCESSING, vol. 9, 1 January 1984 (1984-01-01), pages 714-717, XP055201243, DOI: 10.1109/ICASSP.1984.1172646
- CAPON J: "HIGH-RESOLUTION FREQUENCY-WAVENUMBER SPECTRUM ANALYSIS", PROCEEDINGS OF THE IEEE, IEEE. NEW YORK, US, vol. 57, no. 8, 1 August 1969 (1969-08-01) , pages 1408-1418, XP008025691, ISSN: 0018-9219
- BENJAMIN F. CRON: "Spatial-Correlation Functions for Various Noise Models", THE JOURNAL OF THE ACOUSTICAL SOCIETY OF AMERICA, vol. 34, no. 11, 1 January 1962 (1962-01-01), page 1732, XP055201247, ISSN: 0001-4966, DOI: 10.1121/1.1909110

## Description

Field of the invention

The present invention relates to methods and systems for processing data generated by one or more sonar sensors, such as an array of sonar sensors, to perform a spectral analysis of the data in the spatial or frequency domain. The sensors are typically located underwater, although the invention is equally applicable to sonar systems for sound waves being transmitted in any other liquid, or even in a gas. In particular, the processing may for detection, estimation and localization of underwater sound signal sources (here called "signal sources").

Background of the invention

Spatial spectra and frequency spectra are two essential tools by which a sonar system detects signal sources within a region called a field. Both types of spectra are used in active sonar systems (in which a transducer of the sonar system generates a sound wave for transmission into water, and reflections of the sound wave from one or more objects (signal sources) are received by the sensor(s)) and passive sonar (in which the sensor system does not contain a transmitter but the sensor array(s) receive sound from signal sources, e.g. sound generated by the signal sources, or ambient sound reflected by the signal sources towards the sensor(s)).

A spatial spectrum is an estimation of power distribution across the space sensed by an array of sensors. The function of a spatial spectrum is to estimate the direction of the signal source(s) in order to localize the signal sources in space. The space is referenced by a co-ordinate system involving azimuth angle $\theta$ and, in the case of a 2-dimensional spatial spectrum, also polar angle $\varphi$ as shown in Fig.1. An example of 1-dimensional spatial spectrum across $\theta$ is shown in Fig. 2. By obtaining the peak of the spectrum shown in Fig. 2, and doing this for each of a series of times, it is possible to obtain a "bearing-time" record, as shown in Fig. 3.

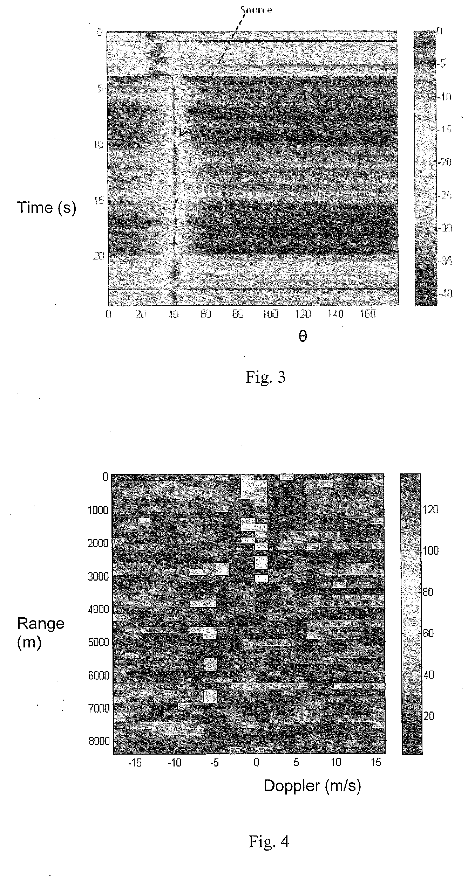

The function of the frequency spectrum is to allow the user to detect the signal source(s) in the frequency domain and then estimate and track the frequency of the sound received from the signal sources. This makes it possible to estimate of the speed of the signal source(s) and reject false alarms from environment echoes. It is an important function as it allows separation of signal sources in the frequency domain that are otherwise superimposed in time. Therefore, the capability to resolve two closely spaced signal sources in the frequency spectrum is also desirable, especially in areas where many sources are present, or when the sources are close in frequency. In active systems, for which the carrier frequency of the sound generated by the transducer is known, the frequency spectrum can be converted to a Doppler spectrum (" after baseband demodulation"), for detecting moving signal sources and indicating the speed at which the signal sources are moving. An example of range-Doppler spectrum is shown in Fig. 4, where "Doppler" indicates the velocity of the signal source, measured in meters per second (m/s).

Resolution is an important performance indicator for a spatial spectrum and determines the capability of the sonar system to resolve closely spaced sources clearly for proper detection. This is especially important in littoral waters where traffic is dense and acoustic energy is able to travel a long distance underwater. Super-resolution performance is defined as the capability to resolve two closely spaced peaks in a power spectrum within a degree, with no energy leakage to other peaks. Super-resolution processing for spatial spectra has remained an active research area for the past three decades.

"Subspace processing" is a well-known processing approach for computing a super-resolution spatial spectrum. The most popular algorithms based on a subspace approach are MUltiple Signal Classification (MUSIC) [4] and Minimum-Norm [3], which have provided de-facto benchmark in resolution performance since 1980s. However, there are two main problems that are associated with these approaches. The first problem is that they involve decomposing a spatial covariance matrix of the sound received by the sensors into a signal subspace and a noise subspace, and this requires accurate knowledge of the number of signal sources in the field. There are many techniques in estimating the number of sources and the most popular ones are Akaike Information Criterion (AIC) and Minimum Description Length (MDL), but they have been shown to have tendency for wrong estimation especially for harsh environments. The second problem is that the subspace approach is very sensitive to the spatial correlation property of ambient noise. It was shown in [2] that the resolving power of subspace techniques will degrade severely if the spatial correlation property of ambient noise is not considered during subspace array processing. This leads to Bienvenu and Kopp's suggestion in [5], to use an adequate ambient noise spatial correlation model to mitigate the problem through a noise whitening process. Pre-processing with a conventional beam-forming method to reduce the sensitivity of these subspace methods is also proposed in [6]. These two aforementioned problems are the main reasons limiting the use of subspace methods in underwater sonar systems.

A MUSIC-like approach has recently been proposed in [1] recently to address the problem of source number estimation however our experiments show that the approach fails in spatial spectral processing for underwater array. The MUSIC-like algorithm fails when the spatially correlation of the ambient noise sampled by the sensor array is not zero, which is normally the case in underwater environments, resulting in severe spurious peaks in the power spectrum which generates false alarms and/or blocks the actual signal peak.

We now present a mathematical formulation of the problem which will be used in the rest of this document. The number of sensors in the array is denoted by L, and each provides a separate channel. The sound received by the array receiver vector is decomposed into N frequency bins, labeled by a variable n. The L sound signals at the $n^{th}$ frequency bin are denoted by x($n$). This is formed by stacking the value of each channel as follows:

$$\mathbf{x}(n) = \begin{bmatrix} x_1(n) \\ \vdots \\ x_L(n) \end{bmatrix}$$

The pointing vector towards a direction is denoted by a "steering vector" e($\theta$) (for a hydrophone array) or e($\theta,\varphi$) (for a vector sensor array), but often simply written e. e indicates the phase offset of a given sensor compared to a first sensor in the array, in relation to a "narrowband signal" (a signal having a bandwidth less than 10% of its carrier signal) propagating in the direction in which the power spectrum is being measured.

The first step of known methods for generating the spatial spectrum is to calculate a covariance matrix. One way of defining this is as $R = \frac{1}{N} \sum_{n=1}^{N} xx^H$ where n denotes the sensor number for spatial spectrum use-case.

One current conventional method then computes the spatial spectrum as follows, $p = e^H Re$. Note that **p** is a shorthand for $\mathbf{p}(\theta)$ or $\mathbf{p}(\theta, \varphi)$, and the methods below are carried out successively for each direction for which the power spectrum is being measured (i.e. each value of $\theta$, or each value of $\theta$ and $\varphi$).

By contrast, Capon's method [7] computes the spatial spectrum as follows:

   a. An L-component weight vector $w_{cap}$ is computed by $W_{cap} = \frac{R^{-1}e}{e^H R^{-1} e}$
   b. The spatial spectrum is computed by $p = w_{cap}{}^H R w_{cap}$.

The resolution performance of the Capon's method is dependent on the receiver signal-to-noise ratio. Super-resolution performance can only be obtained when signal-to-noise ratio is infinity, which is not possible.

The MUSIC method computes the spatial spectrum as follows:

   a Perform singular value decomposition on the covariance matrix R to obtain the L number of eigenvalues, $\lambda_i$ ,and their respective eigenvectors, $q_i$ such that $R = \sum_{i=1}^{L} \lambda_i q_i q_i{}^H$

   b Estimate the number of signal sources in the field, K.

   c Collate the eigenvectors associated to the (L-K) minimum eigenvalues to form a noise subspace $E_n = [q_{K+1}, q_{K+2}, ..., q_L]$.

   d Compute the weight vector by $w = E_n E_n{}^H e$.

   e Compute the spectral power by $p = |w^H e|^{-2}$.

The standard MUSIC-like algorithm is as follows:

   a An L-component weight vector w is computed as the vector which minimizes $w^H R w$ subject to $w^H e e^H w + \beta w^H w = c$, where $\beta$ is a control variable, and c is an arbitrary constant. This is equivalent to defining w as the eigenvector associated with the minimum eigenvalue of $(\beta I + e e^H)^{-1} R$, where $I$ is the LxL identity matrix.

   b Compute the spectral power by $p = |w^H e|^{-2}$.

In the frequency case, there may be only a single sensor. The frequency case may act on the signal output from a single beam from a beamforming process. Then the symbol n in $R = \frac{1}{N} \sum_{n=1}^{N} xx^H$ denotes time instant instead of sensor number.

Frequency spectra are conventionally generated by Fourier analysis with windowing functions to reduce the effects of spectral leakage, however the resolution is less then desired and dependent on the length of data used to perform spectral analysis. Capon's method provides an alternative high-resolution frequency analysis method but it does not have sub-degree resolution performance and its performance is dependent on the signal-to-noise ratio of the received signal. It would be desirable to provide a higher resolution method for computing a frequency spectrum or a Doppler spectrum.

## Summary of the invention

The present invention aims to provide new and useful methods for generating a spectrum of sound signals received by an array of sound sensors.

Embodiments of the present invention may address one or more of the following technical problems:

i. To resolve closely spatially spaced signal sources in various underwater deployment and environmental noise conditions;

ii. To provide optimal resolution to the left/right ambiguity problem for a linear underwater acoustic vector sensor array or an underwater acoustic hybrid sensor array;

iii. To resolve signal sources that are closely spaced in the frequency

domain in various underwater deployment and environmental noise conditions.

The invention proposes a method of obtaining a spatial power spectrum as defined by claim 1. In general terms, the invention proposes that, if a covariance matrix of the captured sound is denoted by an LxL matrix R, then, for each power value which is to be calculated for each direction, a set $\boldsymbol{w}$ of L weights are derived which minimize $\boldsymbol{w}^H \boldsymbol{R} \boldsymbol{w}$ subject to a constraint which is itself a function of a covariance matrix of sound captured by the sensors (which may be based on actual measured sound or a theoretical model. The set of weights $\boldsymbol{w}$ is used to produce a power spectrum at a particular time instant.

Embodiments of the invention can be used to compute two types of spectrum: (i) the first type of spectrum is a spatial spectrum and (ii) the second type of spectrum is a frequency spectrum (or, by extension, a Doppler spectrum). That is, it may be performed in either the spatial or the frequency domain. For each kind of domain, the invention employs a set of basis functions, each denoted by a value $\boldsymbol{e}$.

In the case of the spatial domain, for which the task is to determine a power spectrum for each of a set of directions, a basis function $\boldsymbol{e}$ is defined for each respective direction. This is the steering vector for that direction. That is, $\boldsymbol{e}$ is a vector with a number of components equal to the number of sensors L, and with each component indicating the relative phase with respect to a reference point in the array, of a wavefront propagating in that direction. The steering vector is a function of signal frequency, propagating speed and pointing direction.

In the case of the frequency domain, for which the task is to determine a power spectrum for each of a set of frequencies, a basis function $\boldsymbol{e}$ is derived for each respective frequency. The basis function $\boldsymbol{e}$ is actually the Fourier basis vector which can be denoted by $\boldsymbol{e}(f)$.

Note that present invention does not require a subspace decomposition.

In a first case, which is particularly suitable for the spatial domain, the constraint may one in the form $\boldsymbol{w}^H \boldsymbol{e} \boldsymbol{e}^H \boldsymbol{w} + \beta \boldsymbol{w}^H \boldsymbol{R}_Q \boldsymbol{w} = c$, where $\beta$ is a control variable, c is an arbitrary constant, and $\boldsymbol{R}_Q$ is a noise covariance matrix. In this case, $\boldsymbol{w}$ is equivalent to the eigenvector associated with the minimum eigenvalue of the matrix $\boldsymbol{B} =$

$(\beta \boldsymbol{R}_Q + \boldsymbol{e} \boldsymbol{e}^H)^{-1} \boldsymbol{R}$. This algorithm may be regarded as a generalized MUSIC-like algorithm for computing a spatial spectrum.

In this case, a model is produced of quiescent noise conditions and its spatial covariance matrix $\boldsymbol{R}_Q$. This is termed a quiescent covariance matrix (QCM). The QCM information may be obtained easily in any of the following ways: (a) well-known open literature model, (b) experimental or factory characterization of the sensor array and (c) in-situ measurement.

In a second case, which is suitable for both the spatial and the frequency domains, the constraint may be one

in the form $\boldsymbol{w}^H \boldsymbol{d} \boldsymbol{d}^H \boldsymbol{w} + \beta \boldsymbol{w}^H \boldsymbol{w} = c,$ where $\beta$ is a control variable, c is an arbitrary constant, and $d = \frac{R^{-1}e}{e^H R^{-1} e}$ . In this case, $\boldsymbol{w}$ is equivalent to the eigenvector associated with the minimum eigenvalue of the matrix $\boldsymbol{B} = (\beta \boldsymbol{I} + (\boldsymbol{e}^H \boldsymbol{R}^{-1} \boldsymbol{e})^{-2} \boldsymbol{R}^{-1} \boldsymbol{e} \boldsymbol{e}^H \boldsymbol{R}^{-1})^{-1} \boldsymbol{R}$. This may be regarded as a generalized MUSIC-Capon algorithm which can compute either a spatial spectrum or a frequency spectrum. A QCM is not required in this generalized MUSIC-Capon algorithm, and experimentally we have found that it can provide super-resolution performance.

We now explain the variables used in embodiments of the invention. We define the following quantities:

a) $\boldsymbol{w}$: a Lx1 weight vector generated by the embodiment;

b) $\boldsymbol{e}$: a Lx1 vector which is the basis function of spectral analysis. In the case of obtaining a spatial spectrum, this quantity represents the steering vector at pointing direction; in the case of obtaining a frequency spectrum, this quantity represents the Fourier basis at the analysis frequency bin;

c) $\boldsymbol{R}$: a LxL covariance matrix. In the case of obtaining a spatial spectrum, the entries of this matrix are the cross-covariance measurements between sensors in the array. In the case of obtaining a frequency spectrum, the entries of this matrix are the cross-covariance measurement between time samples of a single signal;

d) $R_Q$: a LxL covariance matrix used in computation of spatial spectrum. The entries of this matrix are the cross-covariance measurements between sensors in the array during noise measurement;

e) **B:** a LxL matrix containing the entries of the generalized eigenvalue problem of the algorithm;

f) **I :** a LxL identity matrix containing ones in its diagonal entries and zeros otherwise;

g) $\beta$ : a scalar quantity for controlling the algorithm.

Given these parameters, the invention may be expressed as follows:

a) The algorithm generates a set of weights, denoted by **w,** at each direction in a spatial spectrum, or at each frequency in a frequency (or Doppler) spectrum;

b) The weight vector **w** can be computed by either of the two following methods:

i. Find the eigenvector associated to the minimum eigenvalue of the

$$\text{matrix } B = \left(\beta R_Q + ee^H\right)^{-1} R.$$

(1)

ii. Find the eigenvector associated to the minimum eigenvalue of the

$$\text{matrix } B = \left(\beta I + \left(e^H R^{-1} e\right)^{-2} R^{-1} ee^H R^{-1}\right)^{-1} R$$

(2)

c) The algorithm computes the power at each direction in a spatial spectrum, or at each frequency in a frequency (or Doppler) spectrum, as $p = |w^H e|^{-2}$

A preferred embodiment of the invention using the weights defined according to (2) is able to adapt to many different environments and deployment situations without the conventional approach of pre-whitening (or pre-filtering), as it incorporates a noise covariance matrix model, $R_Q$, in the processor. The model can be obtained from open-literature noise model or estimated on site.

Although the concept of a generalized eigenvalue approach is not new, the formulations of the matrix **B** are new. The mechanism of the algorithm is as follows:

a) When the embodiment is obtaining the power for a direction in the spatial spectrum which is exactly the direction of a signal source, or when the embodiment is obtaining the power for a frequency bin in the frequency spectrum which contains a frequency emitted by a signal source, the weight vector computed by the minimum eigenvector of **B** is orthogonal to the basis vector. This would result in $w^H e = 0$. Therefore the output spectral power $p = |w^H e|^{-2}$ at the corresponding direction or frequency bin is very large, resulting in a spectral peak with very fine resolution.

b) For all other directions in the spatial spectrum (i.e. non-source directions), or, in the case of a frequency spectrum, all other frequency bins, the weight vector computed by the algorithm is ideally in-phase with the basis vector. This would result in $w^H e = 1$ and the output spectral power $p = |w^H e|^{-2}$ is a small constant quantity.

The control parameter in the first case of Generalized MUSIC-like algorithm shown in eqn (1), $\beta$, is new (and different from the one used in standard MUSIC-like) and the quantity is associated with the directional signal-to-noise ratio and, where applicable, the noise covariance matrix $R_Q$.

We define the following symbols:

a. $\sigma_v^2$ as the noise variance;

b. $\sigma_i^2$ as the variance of $i^{th}$ source;

c. $a_i$ as the steering vector at the direction of $i^{th}$ source;

d. $R_Q$ as the spatial covariance matrix of the ambient noise

e. $\quad \varepsilon = e^H R_Q^{-1} e$

The role of control parameter β is to ensure that a super-resolution peak appears at source directions while maintaining flat response at non-source directions. To achieve that, β is chosen to ensure that the minimum eigenvalue of the generalized eigenvalue problem lies in the noise subspace at source directions; and to ensure that the minimum eigenvalue lies in signal and steering vector subspace at non-source directions.

To ensure that the minimum eigenvalue lies in noise subspace at source directions, the lower bound of control parameter β is

$$\beta > \max \left[ \frac{\sigma_v^2}{\sigma_i^2}, \quad (1-\varepsilon), \quad \lambda_{max}\{R_Q^{-1} a_i a_i^H\} - \varepsilon \right]$$

where max{.} denotes the maximum value in the parenthesis and $\lambda_{max}\{\ \}$ denotes the maximum eigenvalue of the matrix in the parenthesis.

For example, when noise is spatially white, then the noise covariance matrix is an identity matrix. Then $\varepsilon = 1$ and $\lambda_{max}\{R_Q^{-1} a_i a_i^H\} = 1$, hence the control parameter for this special case is given by $\beta > \max \left[ \frac{\sigma_v^2}{\sigma_i^2}, \quad 0, \quad 0 \right]$ which implies that $\beta > \frac{\sigma_v^2}{\sigma_i^2}$. This lower bound is the same as the one shown for MUSIC-like algorithm shown in [8]. The value of β cannot be too large or else spurious peaks would occur at non-source directions. Therefore it is recommended that β should be set at each steering direction to be $\beta = \rho \times \max \left[ \frac{\sigma_v^2}{\sigma_i^2}, \quad (1-\varepsilon), \quad \lambda_{max}\{R_Q^{-1} a_i a_i^H\} - \varepsilon \right]$ where ρ is a scalar value slightly more than 1.

The value of $\varepsilon$ can be computed easily once $R_Q$ is determined, subsequently the value of $\lambda_{max}\{R_Q^{-1} a_i a_i^H\} - \varepsilon$ can also be determined easily. The value of $\sigma_i^2$, i.e., the variance of $i^{th}$ source at its direction can be approximated by many methods such as the following two methods

(i) the Capon's method by $\sigma_i^2 \approx \frac{1}{e^H R^{-1} e}$

(ii) the conventional method $\sigma_i^2 \approx e^H R e$

The importance of noise covariance matrix $R_Q$ is that it eliminates the problem of subspace error, which would otherwise cause a spurious response (i.e. sharp peaks) at non-source directions; and also degrade resolution performance at correct source directions.

Another method to set the value of β is $\beta = \rho \frac{e^H R^{-1} e}{\sigma_v^2}$ where ρ is a scalar >0 and $\sigma_v$ is the noise variance.

For the second case of Generalized-MUSIC-Capon algorithm, shown in Eqn. (2), the derivation of the parameter β is different from the first case of Generalized MUSIC-like algorithm. The associated matrix B in this case can be expressed as follows,

$$B = R - \left( \frac{e^H R^{-1} e}{\beta + d^H d} \right) d e^H$$

And result in the following inequality,

$$\frac{e^H R^{-1} e}{\beta + d^H d} < \sigma_i^2$$

This leads to the expression of $\frac{1}{\beta+d^H d} < 1.$ As such, the upper bound of control parameter is $\beta < 1 - d^H d$. It can be noted that the Generalized MUSIC-Capon algorithm does not require knowledge of noise covariance matrix $R_Q$ and is hence very suitable for active Sonar applications.

The value of vector **d** can be computed at each steered direction easily and therefore the value of $\beta$ in the second case of Generalized MUSIC-Capon algorithm may be set slightly below the upper bound.

A preferred embodiment of the invention is able to compute a super-resolution spatial spectrum without the need to know the number of sources, and is adaptable to different noise conditions. These advantages imply that the invention can be used in many different types of sonar systems. The aforementioned advantages also enable its application to frequency analysis. Furthermore, the energy leakage (i.e. the amount by which the height of one peak in the spectrum obtained by the embodiment is erroneously affected by the sound associated with other peaks) may be essentially zero.

The super-resolution spectral performance of the invention can help to resolve closely spaced signal sources in both the spatial and Doppler domains which cannot be provided by conventional and high resolution methods. This is especially useful in dense traffic circumstances where it is important to distinctly detect closely spaced sources. The advantages of this invention can improve the performance of a sonar system in performing detection, classification and localization of underwater acoustic signal sources.

In active sonar applications, detection of moving signals sources from echoes due to underwater reverberation usually rely on the separation of moving target echoes from zero-Doppler echoes. The super-resolution capability of this invention will result in higher confidence levels in detection as its zero-energy leakage will separate moving target echoes from environmental echoes much better than conventional methods.

This invention can be applied to process data from an array of pressure sensors, an array of acoustic vector sensors and a hybrid array of both types of sensors. When used in a linear array equipped with acoustic vector sensors, the super-resolution performance of the invention can provide optimal left/right ambiguity resolution in direction-of-arrival estimation.

Specifically, embodiments of the invention may be used to process data acquired by any set of sensors, and in particular:

    i. Hydrophones
    ii. Particle velocity sensors
    iii. Acoustic vector sensors

Conventional super-resolution spatial spectral methods require subspace decomposition which in turn requires accurate knowledge of number of sources. This invention does not require such knowledge. This invention, in the case of Eqn. (2), exploits the knowledge of a noise covariance matrix in its computation of weight vector whereas the most common known super-resolution method applies pre-filtering which will affect the original signal.

The power spectra computed at different times may be used to form situation maps displaying energy distribution over time and space for detection and tracking underwater signal sources. A first application is a passive sonar application, to produce a bearing-time record. A second application is an active sonar application, to produce both range-bearing and range-Doppler spectra.

Frequency power spectra computed at different times may be used to form a spectral map displaying the distribution of energy over frequency and time for detection and tracking of underwater signal sources.

The invention may be expressed as a method, typically performed entirely automatically by a computer (i.e. without human involvement, except, optionally, for initiation of the method). Alternatively, it may be expressed as a computer system incorporating a processor (such as the CPU(s) of a general purpose computer) and a data storage device storing program instructions for implementation by the processor to cause the processor to implement the method. Alternatively, it may be expressed as a computer program product (such as a tangible recording medium (e.g. a CD); or software downloadable over a telecommunications network) containing such program instructions, operative by a processor to cause the processor to carry out the method.

Brief description of the drawings

Embodiments of the invention will now be described for the sake of example only with reference to the following figures in which:

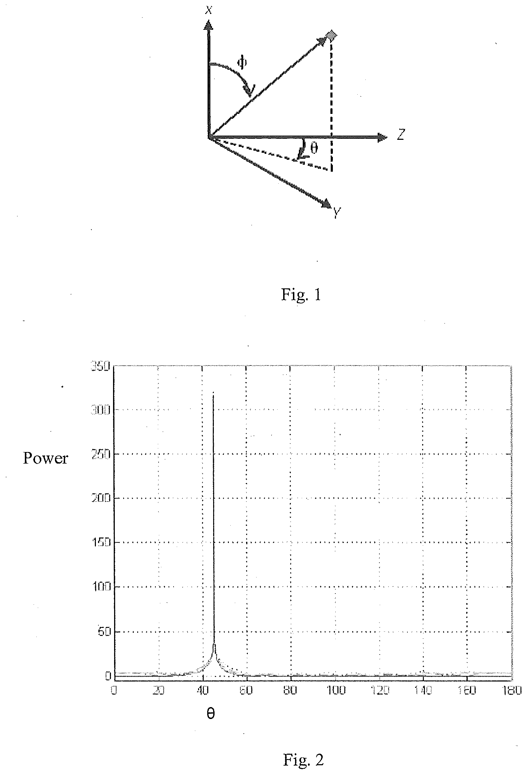

    Fig. 1 shows a known reference coordinate system;
    Fig. 2 shows a one-dimensional spatial spectrum which can be obtained by a known system;
    Fig. 3 shows a bearing-time record which can be produced using a series of spatial spectra of the type shown in Fig. 2;

Fig. 4 is a range-Doppler spectrum which can be obtained using known methods;

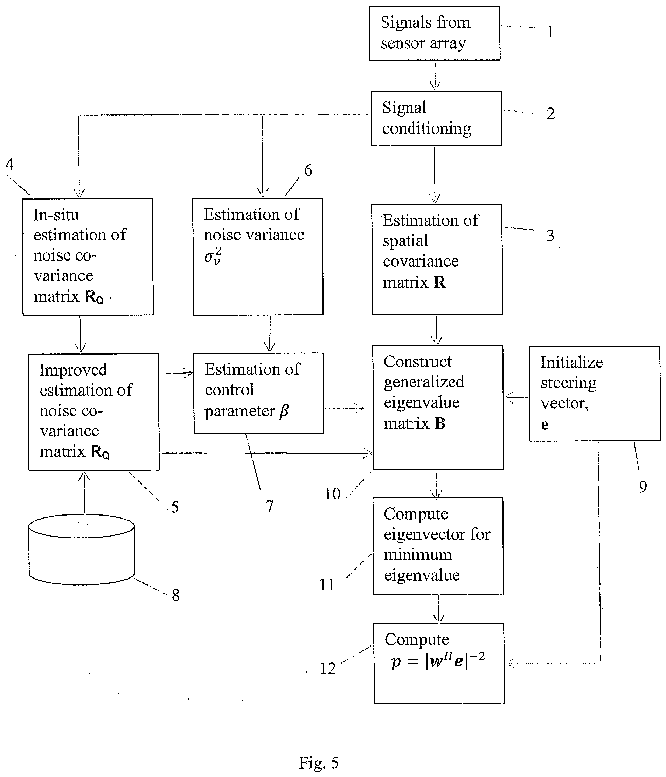

Fig. 5 shows a process which is used in first embodiment of the invention for obtaining a spatial spectrum;

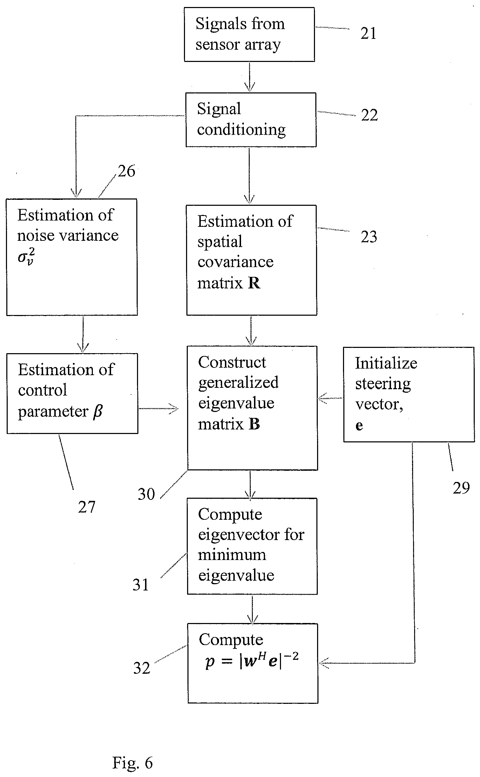

Fig. 6 shows a process which is used in second embodiment of the invention for obtaining a spatial spectrum

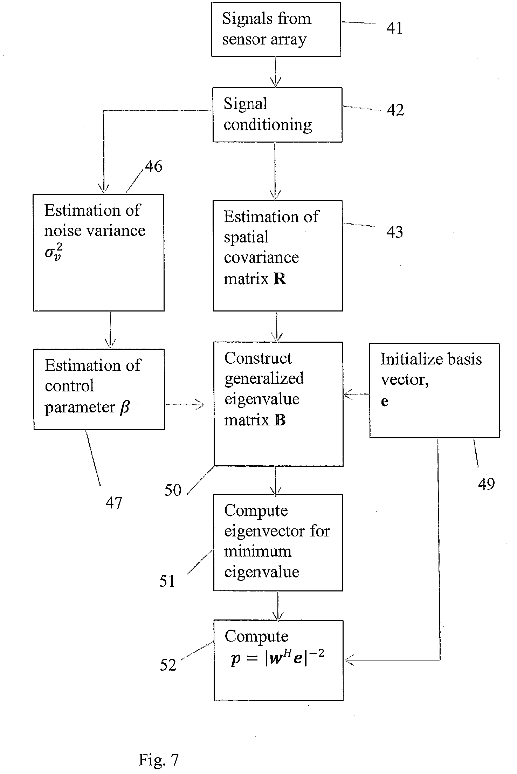

Fig. 7 shows a process which is used in a third embodiment of the invention to obtain a frequency spectrum; and

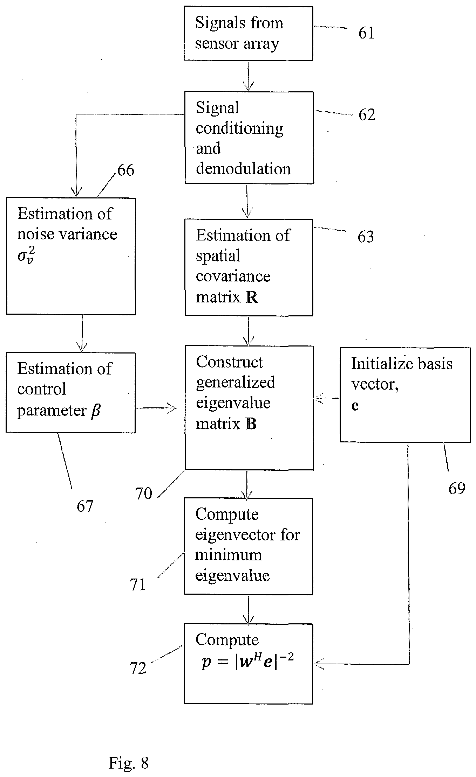

Fig. 8 shows a process which is used in a fourth embodiment of the invention to obtain a Doppler spectrum.

Detailed description of embodiments

Embodiments of the invention will now be described. The embodiments are typically implemented by a processor (e.g. the CPU(s) of a general purpose computer), by following program instructions.

First embodiment 1: Computing Spatial Spectral Power with a Generalized MUSIC-like algorithm

Fig. 5 is a block diagram to illustrate the flow of information in a first embodiment of the invention to compute the spatial spectral power with a generalized MUSIC-like implementation. The generalized eigenvalue matrix for this implementation is $\boldsymbol{B} = (\beta\boldsymbol{R_Q} + \boldsymbol{ee}^H)^{-1}\boldsymbol{R}$, as in Eqn. (1) above.

The input to the method are the signals 1 captured by a sensor array at a given moment. These signals are conditioned 2. The conditioning includes filtering to remove unwanted noise. The conditioned signals are used for calculation 3 of the spatial covariance matrix $\boldsymbol{R}$.

During quiescent conditions, steps 4-7 are performed to obtain a noise covariance matrix $\boldsymbol{R}_Q$ and a value $\beta$ to be used in computing the spatial power spectrum. The values of noise covariance matrix $R_Q$ can be obtained in step 5 in either of two ways (when the method is initialized, this may include selecting which of the ways is used). The first way is in-situ estimation 4 of the noise covariance matrix $\boldsymbol{R}_Q$. This step is to be performed when the sensors are in ambient environment before appearance of target signal source. The system could store the in-situ estimated values of $R_Q$ in the database 8 for future use. The second method of selecting values in $R_Q$ is to obtain them from the noise covariance matrix database 8 which contains one or more noise covariance matrices that were previously estimated or derived from theoretical models.

In step 6 an estimate is made of the noise variance $\sigma_v^2$. There exist many methods to estimate $\sigma_v^2$. The first step is to estimate the mean of the ambient noise $\bar{x}$ thereafter the most common way is to estimate the variance of by

$$\sigma_v^2 = \frac{1}{K}\sum_{k=1}^{K}(x(k) - \bar{x})^2$$

The output of step 5 is used together with the output of step 6 to compute, in step 7, an estimate of control parameter $\beta$.

For each spatial direction successively, step 9 obtains a respective steering vector $\boldsymbol{e}$. Step 10 constructs the matrix $\boldsymbol{B}$, using Eqn. (1). Step 11 will then compute the eigenvector $\boldsymbol{w}$ associated with the minimum eigenvalue of $\boldsymbol{B}$. Finally, the spatial spectral power $p = |\boldsymbol{w}^H\boldsymbol{e}|^{-2}$ is then computed in step 12.

The aforementioned process is then repeated for all directions to generate the entire spatial power spectrum. In the case of an array of omni-direction sensors with one-dimensional geometry, this just means that the steering direction is scanned over the successive azimuth angles $\theta$. When applied to a linear acoustic vector sensor array, a linear hybrid vector sensor array or a sensor array with 2-Dimensional geometry, the steering direction is successively scanned over all azimuth and polar angles.

As mentioned in this first embodiment the covariance matrix $R_Q$ is obtained by actual observation of sound. However, an alternative is to use a theoretical model. For example, For example, by denoting $d_{m,n}$ as the distance between $m^{th}$ and $n^{th}$ sensors and $\lambda$ as the wavelength of the transmitted signal, the spatial correlation properties of an

$$\rho(m,n) = \frac{\sin\frac{2\pi d_{m,n}}{\lambda}}{\frac{2\pi d_{m,n}}{\lambda}} \cdot$$

underwater volume noise model [9] between the $m^{th}$ and $m^{th}$ sensors can be written as The values computed from this model can be used as the $m^{th}$ row and $n^{th}$ column of the covariance matrix. This variation is applicable also to the second embodiment of the invention described below.

Although the first embodiment operates in the spatial domain, the Generalized MUSIC-like algorithm can be used in the frequency domain also. The implementation is similar to that for embodiments 3 and 4 described below, and the method is applied to one output of one sensor or beam. The matrix $R_Q$ would in this case represent the quiescent covariance matrix of the noise condition. Again, a theoretical model may be used to produce $R_Q$.

Embodiment 2: Computing Spatial Spectral Power with Generalized MUSIC-Capon

Fig. 6 shows the process of a second embodiment of the invention, for computing of spatial spectral power with Generalized MUSIC-Capon implementation. The generalized eigenvalue matrix for this implementation is $(\beta I + (e^H R^{-1} e)^{-2} R^{-1} e e^H R^{-1})^{-1} R$, that is Eqn. (2). Steps in Fig. 6 corresponding to steps of step 6 are labeled by reference numerals 20 higher.

As in the first embodiment, the signals 21 received from array are conditioned in step 22. The conditioned signals are then used 23 to estimate the spatial covariance matrix **R**. In step 26 an estimate is made of the noise variance $\sigma_v^2$, and in step 27 the control parameter $\beta$ is calculated.

For a first spatial direction, step 29 calculates the steering direction **e.** Step 30 then constructs the matrix **B** using Eqn. (2). Step 31 will then compute the eigenvector **w** associated with the minimum eigenvalue of **B.** Finally, the spatial spectral power is then computed 32.

The aforementioned process is then repeated for all directions to generate the entire spatial power spectrum. In the case of a sensor array with a one-dimensional geometry, this just means that the steering direction is scanned over the successive azimuth angles $\theta$. When applied to a linear acoustic vector sensor array, a linear hybrid vector sensor array or a sensor array with 2-Dimensional geometry, the steering direction is successively scanned over all azimuth and polar angles.

Embodiment 3: Computing Frequency Spectral Power with Generalized MUSIC-Capon

Embodiment 3 is to construct a frequency spectrum with a Generalized MUSIC-Capon implementation, and is illustrated in Fig. 7. The sensor in this case is typically different from the in the first two embodiments, for example it may be a signal from single sensor or single beam. In the case of active sonar, it may be associated with a device for generating a sound (possibly, but not necessarily, a sound beam), and arranged to detect sound in the beam which is reflected by signal source(s). Optionally, a mechanism may be provided to move the beam (and typically the sensor) through a range of angles. In this embodiment, there is no need to perform a Fourier spectrum, and the algorithm acts on the temporal covariance matrix of the single sensor.

The process flow of embodiment 3 is, however, exactly the same as embodiment 2, and the elements of Fig. 7 corresponding to those of Fig. 6 are labeled by reference values 20 higher. The input 41 to the system in this case is the output of the sensor or an output of a beam-former, and the first step of the process is that the signal 41 is conditioned 42. The cross covariance matrix of the signal is then estimated temporally 43 to form covariance matrix **R.** In the third embodiment, unlike the second, step 49 is carried out for a given frequency (rather than for a single direction, as in the second embodiment), and the basis vector e generated in step 49 is a Fourier vector.

Step 50 then constructs the matrix **B** using Eqn. (2). Step 51 will then compute the eigenvector **w** associated with the minimum eigenvalue of **B.** Finally, the spatial spectral power is then computed 52.

The aforementioned process is then repeated successively for all frequencies to generate the entire frequency power spectrum.

Embodiment 4: Computing Doppler Spectral Power with Generalized MUSIC-Capon

Fig. 8 is a block diagram of a fourth embodiment of the invention for computing of Doppler spectral power with a Generalized MUSIC-Capon implementation. This fourth embodiment is exactly the same the third embodiment (and elements of Fig. 8 are given reference numerals 20 higher than corresponding elements in Fig. 7), except that step 62 contains additional step of demodulating the signal to baseband.

Variations of the embodiments

Many variations of the embodiments above are possible within the scope of the invention as defined by the claims.

For example, in the embodiments above, as described, the weight vector w was found as an eigenvector of one of the following matrices:

$$\text{a)} \quad B = \left(\beta R_Q + e e^H\right)^{-1} R \tag{1}$$

$$\text{b)} \quad B = \left(\beta I + \left(e^H R^{-1} e\right)^{-2} R^{-1} e e^H R^{-1}\right)^{-1} R \tag{2}$$

The computational task of obtaining the B as given by (1) may be simplified by approximating B with one of the following:

a)
$$B = \left( \beta^{-1} R_Q^{-1} - \left( \frac{\beta^{-2}}{\beta^{-1}+1} \right) R_Q^{-1} ee^H R_Q^{-1} \right) R$$

b)
$$B = \left( R_Q^{-1} - \left( \frac{\beta^{-1}}{\beta^{-1}+1} \right) R_Q^{-1} ee^H R_Q^{-1} \right) R$$

c)

$$B = R_Q^{-1} R - \left( \frac{\beta^{-1}}{\beta^{-1}+1} \right) R_Q^{-1} ee^H R_Q^{-1} R$$

Expressions (a)-(c) are successively easier to calculate than (1), and although they are less accurate approximations to it we have found them to give results which are as good.

The computational task of obtaining the **B** as given by (2) may be simplified by approximating **B** with one of the following:

c)

c)
$$B = \left( \beta^{-1} I - \left( \frac{\beta^{-2}}{\beta^{-1}+d^H d} \right) dd^H \right) R$$

d)
$$B = \left( I - \left( \frac{\beta^{-1}}{\beta^{-1}+d^H d} \right) dd^H \right) R$$

e)
$$B = R - \left( \frac{\beta^{-1}}{\beta^{-1}+d^H d} \right) dd^H R$$

f)
$$B = R - \left( \frac{\beta^{-1}}{\beta^{-1}+d^H d} \right) \left( e^H R^{-1} e \right)^{-2} R^{-1} ee^H$$

where $d = \frac{R^{-1}e}{e^H R^{-1}e}$. Expressions (e)-(h) are successively easier to calculate than (2), and although they are less accurate approximations to it we have found them to give results which are as good.

In another example, the methods above may be varied by including a diagonal loading of covariance matrix, i.e. **R** is replaced by **R+μI**, where $\mu$ is real number more than 0.

In another example, the methods above may be varied by including diagonal loading of quiescent noise covariance matrix, i.e. **R$_Q$** may be replaced by **R$_Q$+αI** where a is real number more than 0.

References

The disclosure of the following citations is incorporated herein by reference in its entirety:

[1] Ying Zhang and Boon Poh Ng, "MUSIC-Like DOA Estimation Without Estimating the Number of Sources", IEEE Transactions on Signal Processing, Vol.58, No.3, pp 1668-1676, March 2010.

[2] Lim Hock Siong, "Robust MUSIC-Like Processing for Passive Underwater Applications", PhD Thesis, Nanyang Technological University, 2014.

[3] R. Kumaresan and D. W. Tuft, "Estimating the Angles of Arrival of Multiple Plane Waves", IEEE Transactions on Aerospace and Electronic Systems, Vol.19, No.1, pp - 134-139, January 1983.

[4] R. O. Schmidt, "Multiple Emitter Location and Signal Parameter Estimation", IEEE Transactions on Antennas and Propagation, Vol.34, No.3, pp 276-280, 1986.

[5] G. Bienvenu and L. Kopp, "Adaptivity to Backgroung Noise Spatial Coherence for High Resolution Passive Methods", IEEE Internation Conference on Acoustic Speech and Signal Processing, Vol.5, pp 307-310, 1980.

[6] G.Bienvenu and L.Kopp, "Decreasing High Resolution Method Sensitivity by Conventional Beamforming Process", IEEE Internation Conference on Acoustic Speech and Signal Processing, Vol.9, pp 714-717, 1984.

[7] J.Capon, "High Resolution Frequency-Wavenumber Spectrum Analysis", Proceedings IEEE, Vol.57, No.8, pp 1408-1418, August 1969.

[8] V.V.Reddy, B.P.Ng and A.W.H.Khong, "Insights into MUSIC-like Algorithm", IEEE Transactions on Signal Processing, Vol.61, No.10, pp 2551-2556, May 2013.

[9] B.F.Cron and C.H.Sherman, "Spatial Correlation Functions for Various Noise Models", The Journal of Acoustic Society of America, Vol.34, No.11, pp1732-1737, November 1962.

**Claims**

1. A method of obtaining a spatial power spectrum from L sound signals captured during a time interval by L respective sound sensors, the method comprising:

    deriving a covariance matrix **R** of the sound captured by the L sensors;
    for each direction of a predetermined set of directions,

      (i) deriving a respective steering vector **e,** wherein the steering vector **e** is a vector with a number of components equal to the number of sensors L, and with each component indicating the relative phase with respect to a reference point in an array, of a wavefront propagating in that direction, and
      (ii) obtaining a set of L weights **w** which minimize $w^H Rw$ subject to a constraint which is a function of the steering vector and a covariance matrix of sound captured by the sensors, wherein the constraint is in the form $w^H ee^H w + \beta w^H R_Q w = c$, where $\beta$ is a control variable, c is an arbitrary constant, and $R_Q$ is a noise covariance matrix; and
      (iii) using the weights **w** to obtain a power value for the direction.

2. A method according to claim 1, further comprising generating the quiescent noise covariance matrix $R_Q$, and generating a matrix **B** as a function of **e, R, $R_Q$,** and a control parameter $\beta$, said weights **w** being generated as the eigenvector of **B** having the minimum eigenvalue.

3. A method according to claim 2 in which $B = (\beta R_Q \mid ee^H)^{-1} R.$

4. A method according to claim 1, further comprising generating a matrix **B** as a function of **e, R,** and a control parameter $\beta$, said weights **w** being generated as the eigenvector of **B** having the minimum eigenvalue.

5. A method according to claim 4 in which $B = (\beta I + (e^H R^{-1} e)^{-2} R^{-1} ee^H R^{-1})^{-1} R.$

6. A method according to claim 3 or claim 5 in which $\beta$ is set according to $\beta = \rho \dfrac{e^H R^{-1} e}{\sigma_v^2}$ where p is a scalar >0 and $\sigma_V$ is a value representative of ambient noise.

7. A computer system comprising a processor and a data storage device storing program instructions operative, when performed by the processor, to cause the processor to perform a method according to any of claims 1 to 6.

8. A computer program product, such as a tangible recording medium, comprising program instructions operative, when performed by a processor, to cause the processor to perform a method according to any of claims 1 to 6.

**Patentansprüche**

1. Verfahren zum Erlangen eines räumlichen Leistungsspektrums von L Schallsignalen, erfasst während eines Zeitintervalls durch L jeweilige Schallsensoren, das Verfahren umfassend:

Ableiten einer Kovarianzmatrix **R** des durch die L Sensoren erfassten Schalls;
für jede Richtung einer im Voraus bestimmten Menge von Richtungen:

(i) Ableiten eines jeweiligen Lenkungsvektors **e,** wobei der Lenkungsvektor e ein Vektor mit einer Anzahl von Komponenten gleich der Anzahl von Sensoren L ist und wobei jede Komponente die relative Phase in Bezug auf einen Referenzpunkt in einer Anordnung einer Wellenfront, die sich in dieser Richtung fortpflanzt, angibt und

(ii) Erlangen einer Menge von L Gewichten **w,** die **w$^H$Rw** minimieren, in Abhängigkeit von einer Einschränkung, die eine Funktion des Lenkungsvektors und einer Kovarianzmatrix von durch die Sensoren erfassten Schall ist, wobei die Einschränkung in der Form **w$^H$ee$^H$w** + β**w$^H$R$_Q$w** = c ist, wobei β eine Steuervariable ist, c eine beliebige Konstante ist und **R$_Q$** eine Rauschkovarianzmatrix ist; und

(iii) Verwenden der Gewichte **w** zum Erlangen eines Leistungswerts für die Richtung.

2. Verfahren nach Anspruch 1, ferner umfassend das Erzeugen der Ruhe-Rauschkovarianzmatrix **R$_Q$** und das Erzeugen einer Matrix **B** als eine Funktion von e, **R, R$_Q$** und eines Steuerparameters β, wobei die Gewichte **w** als der Eigenvektor von **B,** der den minimalen Eigenwert aufweist, erzeugt werden.

3. Verfahren nach Anspruch 2, wobei **B** = (β**R$_Q$** | **ee$^H$**)$^{-1}$**R** ist.

4. Verfahren nach Anspruch 1, ferner umfassend das Erzeugen einer Matrix **B** als eine Funktion von **e, R** und eines Steuerparameters β, wobei die Gewichte **w** als der Eigenvektor von **B,** der den minimalen Eigenwert aufweist, erzeugt werden.

5. Verfahren nach Anspruch 4, wobei **B** = (β**I** + (**e$^H$R$^{-1}$e**)$^{-2}$**R$^{-1}$ee$^H$R$^{-1}$**)$^{-1}$**R** ist.

6. Verfahren nach Anspruch 3 oder Anspruch 5, wobei β gemäß $\beta = \rho \dfrac{e^H R^{-1} e}{\sigma_v^2}$ eingestellt wird, wobei ρ ein Skalar >0 ist und σ$_v$ ein Wert ist, der Umgebungsrauschen repräsentiert.

7. Computersystem, umfassend einen Prozessor und eine Datenspeichervorrichtung, die Programmanweisungen speichern, die funktionsfähig sind, wenn sie durch einen Prozessor ausgeführt werden, zu bewirken, dass der Prozessor ein Verfahren nach einem der Ansprüche 1 bis 6 durchführt.

8. Computerprogrammprodukt wie ein materielles Aufzeichnungsmedium, umfassend Programmanweisungen, die funktionsfähig sind, wenn sie durch einen Prozessor ausgeführt werden, zu bewirken, dass der Prozessor ein Verfahren nach einem der Ansprüche 1 bis 6 durchführt.

**Revendications**

1. Procédé d'obtention d'un spectre de puissance spatiale à partir de L signaux de son qui sont capturés pendant un intervalle temporel au moyen de L capteurs de son respectifs, le procédé comprenant :

la dérivation d'une matrice de covariance **R** du son qui est capturé au moyen des L capteurs ;
pour chaque direction d'un jeu prédéterminé de directions :

(i) la dérivation d'un vecteur directeur respectif **e,** dans lequel le vecteur directeur **e** est un vecteur qui comporte un nombre de composantes qui est égal au nombre de capteurs L, et chaque composante indiquant la phase relative, par rapport à un point de référence dans un réseau, d'un front d'onde qui se propage dans cette direction ; et

(ii) l'obtention d'un jeu de L poids **w** qui minimisent **w$^H$Rw** soumis à une contrainte qui est une fonction du vecteur directeur et d'une matrice de covariance du son qui est capturé au moyen des capteurs, dans lequel la contrainte se présente sous la forme **w$^H$ee$^H$w** + β**w$^H$R$_Q$w** = c, où β est une variable de commande, c est une constante arbitraire et **R$_Q$** est une matrice de covariance de bruit ; et

(iii) l'utilisation des poids **w** pour obtenir une valeur de puissance pour la direction.

2. Procédé selon la revendication 1, comprenant en outre la génération de la matrice de covariance de bruit de repos

$R_Q$, et la génération d'une matrice **B** en tant que fonction de e, de **R**, de $R_Q$ et d'un paramètre de commande β, lesdits poids **w** étant générés en tant que vecteur propre de **B** qui présente la valeur propre minimum.

3. Procédé selon la revendication 2, dans lequel **B** = (β$R_Q$ | ee$^H$)$^{-1}$**R**.

4. Procédé selon la revendication 1, comprenant en outre la génération d'une matrice **B** en tant que fonction de **e,** de **R** et d'un paramètre de commande β, lesdits poids **w** étant générés en tant que vecteur propre de **B** qui présente la valeur propre minimum.

5. Procédé selon la revendication 4, dans lequel **B** = (β**1** + (e$^H$**R**$^{-1}$e)$^{-2}$**R**$^{-1}$ee$^H$**R**$^{-1}$)$^{-1}$**R**.

6. Procédé selon la revendication 3 ou la revendication 5, dans lequel β est défini conformément à $\beta = \rho \dfrac{e^H R^{-1} e}{\sigma_v^2}$ où est ρ un scalaire > 0 et $\sigma_v$ est une valeur qui est représentative du bruit ambiant.

7. Système informatique comprenant un processeur et un dispositif de stockage de données qui stocke des instructions de programme qui sont opérationnelles, lorsqu'elles sont exécutées par le processeur, pour amener le processeur à réaliser un procédé selon l'une quelconque des revendications 1 à 6.

8. Progiciel, tel qu'un support d'enregistrement tangible, comprenant des instructions de programme qui sont opérationnelles, lorsqu'elles sont exécutées par un processeur, pour amener le processeur à réaliser un procédé selon l'une quelconque des revendications 1 à 6.

Fig. 1

Fig. 2

EP 3 227 703 B1

Fig. 3

Fig. 4

16

Signals from
sensor array — 1

Signal
conditioning — 2

4

In-situ
estimation of
noise co-
variance
matrix $\mathbf{R_Q}$

6

Estimation of
noise variance
$\sigma_v^2$

Estimation of
spatial
covariance
matrix $\mathbf{R}$ — 3

Improved
estimation of
noise co-
variance
matrix $\mathbf{R_Q}$

Estimation of
control
parameter $\beta$

Construct
generalized
eigenvalue
matrix $\mathbf{B}$

Initialize
steering
vector,
$\mathbf{e}$

5

7

10

9

Compute
eigenvector for
minimum
eigenvalue

11

8

Compute
$p = |\mathbf{w}^H\mathbf{e}|^{-2}$

12

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YING ZHANG ; BOON POH NG.** MUSIC-Like DOA Estimation Without Estimating the Number of Sources. *IEEE Transactions on Signal Processing,* March 2010, vol. 58 (3), 1668-1676
- Robust MUSIC-Like Processing for Passive Underwater Applications. **LIM HOCK SIONG.** PhD Thesis. Nanyang Technological University, 2014
- **R. KUMARESAN ; D. W. TUFT.** Estimating the Angles of Arrival of Multiple Plane Waves. *IEEE Transactions on Aerospace and Electronic Systems,* January 1983, vol. 19 (1), 134-139
- **R. O. SCHMIDT.** Multiple Emitter Location and Signal Parameter Estimation. *IEEE Transactions on Antennas and Propagation,* 1986, vol. 34 (3), 276-280
- **G. BIENVENU ; L. KOPP.** Adaptivity to Background Noise Spatial Coherence for High Resolution Passive Methods. *IEEE Internation Conference on Acoustic Speech and Signal Processing,* 1980, vol. 5, 307-310

- **G.BIENVENU ; L.KOPP.** Decreasing High Resolution Method Sensitivity by Conventional Beamforming Process. *IEEE Internation Conference on Acoustic Speech and Signal Processing,* 1984, vol. 9, 714-717
- **J.CAPON.** High Resolution Frequency-Wavenumber Spectrum Analysis. *Proceedings IEEE,* August 1969, vol. 57 (8), 1408-1418
- **V.V.REDDY ; B.P.NG ; A.W.H.KHONG.** Insights into MUSIC-like Algorithm. *IEEE Transactions on Signal Processing,* May 2013, vol. 61 (10), 2551-2556
- **B.F.CRON ; C.H.SHERMAN.** Spatial Correlation Functions for Various Noise Models. *The Journal of Acoustic Society of America,* November 1962, vol. 34 (11), 1732-1737